(19) **Europäisches Patentamt / European Patent Office / Office européen des brevets**

(11) **EP 2 853 860 B1**

(12) # FASCICULE DE BREVET EUROPEEN

(45) Date de publication et mention
de la délivrance du brevet:
**27.04.2016 Bulletin 2016/17**

(51) Int Cl.:
*G01C 23/00* (2006.01)     *G05D 1/06* (2006.01)
*B64C 13/04* (2006.01)

(21) Numéro de dépôt: **14183680.9**

(22) Date de dépôt: **05.09.2014**

(54) **Procédé et dispositif d'aide au pilotage d'un aéronef lors d'un vol parabolique en vue de générer une impesanteur dans l'aéronef**

Pilotenassistenzverfahren und -vorrichtung für ein Luftfahrzeug während eines Parabelflugs, um eine Schwerelosigkeit in einem Luftfahrzeug zu erzeugen

Method and device for assisted piloting of an aircraft during a parabolic flight intended for generating weightlessness in the aircraft

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.09.2013 FR 1358829**

(43) Date de publication de la demande:
**01.04.2015 Bulletin 2015/14**

(73) Titulaire: **AIRBUS OPERATIONS (SAS)**
**31060 Toulouse (FR)**

(72) Inventeur: **Delporte, Martin**
**31470 Fonsorbes (FR)**

(74) Mandataire: **Gevers & Orès**
**41 avenue de Friedland**
**75008 Paris (FR)**

(56) Documents cités:
**FR-A1- 2 986 065     FR-A1- 2 986 866**
**US-A- 5 003 305     US-A- 5 707 026**
**US-A- 5 971 319**

EP 2 853 860 B1

**Description**

La présente invention concerne un procédé et un dispositif d'aide au pilotage d'un aéronef lors d'un vol parabolique en vue de générer une impesanteur dans l'aéronef.

On sait que l'impesanteur correspond à une situation d'absence de pesanteur et représente l'état d'un corps, en particulier d'un corps humain, qui est tel que l'ensemble des forces gravitationnelles et inertielles auxquelles il est soumis possède une résultante et un moment résultant nuls.

Depuis le début de la conquête spatiale, le besoin de reconstituer des conditions d'impesanteur a été satisfait par la réalisation de vols spécifiques d'avions de transport civil aménagés à cet effet. Il est en effet possible d'obtenir des conditions d'impesanteur, généralement pendant une vingtaine de secondes, à l'intérieur d'un avion de ligne, en amenant ce dernier sur une trajectoire parabolique. Cette méthode est utilisée depuis de nombreuses années pour l'entraînement des astronautes, et également pour la réalisation d'expériences scientifiques requérant des conditions d'impesanteur.

Le pilotage d'un avion sur une telle trajectoire parabolique est délicat essentiellement sur l'axe de tangage, l'axe de roulis étant uniquement contrôlé pour maintenir l'inclinaison nulle.

Sur l'axe de tangage, pour aider le pilote à obtenir la condition d'impesanteur, on lui fournit généralement une indication relative au facteur de charge vertical. Ce facteur de charge vertical est représenté sur un instrument dédié au moyen d'une échelle linéaire munie de graduations, sur laquelle est repéré un point d'annulation du facteur de charge.

Si le facteur de charge indiqué est supérieur à 0 alors le pilote doit pousser sur le manche. S'il est inférieur à 0, le pilote doit tirer sur le manche.

Cette technique est relativement efficace et permet d'obtenir des résultats satisfaisants dans la plupart des cas, avec un équipage bien entraîné.

Elle présente cependant un inconvénient. En effet, sur un avion d'architecture usuelle, c'est-à-dire muni d'un empennage horizontal arrière, la gouverne de profondeur a une action directe inverse de l'effet voulu par le pilote. Si par exemple le pilote voit que le facteur de charge est légèrement positif, il va pousser sur le manche. Cette action a pour effet de défléchir la gouverne de profondeur vers le bas. Ce braquage de la gouverne de profondeur génère une augmentation de portance de l'empennage horizontal arrière, dont l'effet prépondérant est la création d'un moment à piquer au centre de gravité. Ce moment génère une accélération de tangage négative, intégrée en une vitesse de tangage négative elle-même intégrée en une diminution de l'assiette, qui entraîne une réduction de l'incidence et donc finalement une réduction de la portance et ainsi une réduction du facteur de charge, ce qui était l'intention initiale du pilote. Toutefois, cette réduction du facteur de charge est obtenue après une double intégration. Il existe un effet du braquage de la gouverne de profondeur, plus faible mais plus immédiat : l'augmentation de la portance de l'empennage horizontal dans l'exemple d'un pilote qui pousse sur le manche, crée globalement sur l'avion et de façon transitoire une augmentation de la portance et donc une augmentation du facteur de charge. Par conséquent, un pilote qui pousse sur le manche pour réduire le facteur de charge va, transitoirement, créer une augmentation du facteur de charge, faible mais bien visible. L'effet inverse se produit si le pilote tire sur son manche dans le cas où il veut augmenter le facteur de charge.

Cet effet indirect de la gouverne de profondeur a deux principales conséquences sur la qualité de l'impesanteur obtenue dans l'avion :

    a) il va être nécessaire que le pilote soit bien entraîné pour être capable de piloter avec une sorte de précommande sans se préoccuper de l'effet initial de son action sur le manche ; et
    b) en cas de perturbations atmosphériques, le pilote tentera de compenser les fluctuations du facteur de charge qu'il constate sur son indicateur, ne sachant pas si elles proviennent d'un effet extérieur ou de sa propre action. Et chacune de ses actions aura pour effet de dégrader la qualité de l'impesanteur, en particulier à l'arrière de la cabine.

Par ailleurs, on connaît par le document US - 5 971 319 un système pour reconfigurer rapidement un aéronef d'une configuration cargo ou passagers en une configuration de vol parabolique. Ce système usuel prévoit de calculer une consigne de manche pour un vol parabolique, et d'afficher des symboles courant et prédit pour aider un pilote à réaliser le vol parabolique.

La présente invention a pour objet de remédier l'inconvénient précité. Elle concerne un procédé d'aide au pilotage d'un aéronef lors d'un vol parabolique en vue de générer une impesanteur dans l'aéronef, qui permet de fournir une aide au pilote de sorte qu'il sache à tout moment, de façon directe et immédiate, quelle action ou ordre il doit appliquer sur son manche, et ainsi minimiser les actions parasites qui dégradent la qualité de l'impesanteur.

A cet effet, selon l'invention, ledit procédé d'aide au pilotage d'un aéronef lors d'un vol parabolique en vue de générer une impesanteur dans l'aéronef, ledit aéronef comprenant un manche apte à être actionné par un pilote pour modifier sa position et configuré pour agir sur au moins une gouverne de profondeur afin de générer un pilotage de l'aéronef sur l'axe de tangage en fonction de la position dudit manche,
est remarquable en ce qu'il comprend une suite d'étapes, mises en oeuvre de façon automatique et répétitive, lors d'un vol parabolique de l'aéronef et consistant en temps réel :

    a) à calculer une consigne de manche correspondant à une position optimale courante du manche pour réaliser le vol parabolique ;

b) à déterminer une position effective (c'est-à-dire réelle) courante du manche ; et

c) à présenter simultanément, sur au moins une échelle de positions de manche, affichée sur un écran du poste de pilotage :

- un premier indicateur représentatif de ladite consigne de manche, calculée à l'étape a) ; et
- un second indicateur représentatif de ladite position effective courante du manche, déterminée à l'étape b).

Ainsi, grâce à l'invention, la consigne de manche (qui illustre une position optimale du manche pour faire voler l'aéronef selon un vol parabolique permettant de créer une impesanteur) est calculée en temps réel et est adaptée à la situation courante de l'aéronef, au cours du vol. Cette consigne de manche est fournie au pilote via le premier indicateur, qui indique ainsi au pilote à tout moment, la position où doit être amené le manche pour réaliser un pilotage optimal de l'aéronef. Ladite consigne de manche dépendant uniquement de la vitesse et de l'assiette longitudinale, comme précisé ci-dessous, elle est quasi insensible aux perturbations atmosphériques et n'est pas dépendante de la qualité de la mesure du facteur de charge.

Par conséquent, la présente invention fournit une aide au pilote en lui indiquant en temps réel, de façon directe, quelle action il doit appliquer sur son manche pour réaliser le vol parabolique, permettant ainsi de minimiser les actions parasites qui dégradent la qualité de l'impesanteur.

Selon l'invention, à l'étape a), ladite consigne de manche C est calculée à l'aide de l'équation suivante :

$$ C = k0 + k1 * \cos \vartheta / V + k2 * \sin 2\vartheta / V^2 $$

dans laquelle:

- $\vartheta$ est une assiette longitudinale courante de l'aéronef ;
- V est une vitesse courante de l'aéronef ; et
- k0, k1 et k2 sont des constantes prédéterminées.

Dans ce mode de réalisation préféré, avantageusement :

- l'assiette longitudinale de l'aéronef est mesurée à l'aide d'au moins un capteur inertiel embarqué sur l'aéronef ; et
- la vitesse de l'aéronef est déterminée à l'aide d'au moins l'un des moyens embarqués suivants :

  • au moins un capteur inertiel ;

  • au moins un récepteur d'un système de positionnement par satellites ; et
  • au moins un capteur de pression ou de température.

En outre, dans un mode de réalisation préféré, à l'étape c), l'échelle est affichée de façon verticale et lesdits premier et second indicateurs sont affichés de part et d'autre de cette échelle verticale.

Par ailleurs, avantageusement, ledit procédé comporte une étape supplémentaire, antérieure à l'étape a) et consistant à déterminer les constantes k0, k1 et k2 en mettant en oeuvre les opérations suivantes :

- déterminer et enregistrer, en temps réel, des valeurs de l'assiette longitudinale de l'aéronef, de la vitesse de l'aéronef et de la déflexion du manche, au cours d'au moins un vol parabolique réalisé par l'intermédiaire d'au moins l'une des opérations suivantes : au moins une simulation et/ou au moins un essai en vol ; et
- calculer lesdites constantes k0, k1 et k2 à l'aide des valeurs de l'assiette longitudinale, de la vitesse et de la déflexion du manche, ainsi enregistrées.

La présente invention concerne également un dispositif d'aide au pilotage d'un aéronef lors d'un vol parabolique d'un aéronef en vue de générer une impesanteur dans l'aéronef.

Selon l'invention, ledit dispositif d'aide au pilotage est remarquable en ce qu'il comporte :

- une unité de calcul configurée pour calculer automatiquement une consigne de manche correspondant à une position optimale courante du manche pour réaliser le vol parabolique ;
- une unité de détermination de position configurée pour déterminer automatiquement une position effective courante du manche ; et
- une unité d'affichage configurée pour présenter sur au moins une échelle de positions de manche, affichée sur un écran du poste de pilotage, simultanément :

  • un premier indicateur représentatif de ladite consigne de manche, calculée par ladite unité de calcul ; et
  • un second indicateur représentatif de ladite position effective courante du manche, déterminée par ladite unité de détermination de position.

Dans un mode de réalisation particulier, ledit dispositif d'aide au pilotage comporte de plus un ensemble de sources d'informations, comprenant au moins l'une des sources d'informations suivantes :

- au moins un capteur inertiel ;
- au moins un récepteur d'un système de positionnement par satellites ; et

- au moins un capteur de pression ou de température.

La présente invention concerne également un système de pilotage manuel d'un aéronef, comprenant un manche apte à être actionné par un pilote pour modifier sa position et configuré pour agir sur au moins une gouverne de profondeur afin de générer un pilotage de l'aéronef sur l'axe de tangage en fonction de la position dudit manche, ledit système de pilotage manuel comprenant de plus un dispositif d'aide au pilotage tel que celui précité.

La présente invention concerne en outre un aéronef, en particulier un avion de transport, qui est pourvu d'un tel dispositif d'aide au pilotage et/ou d'un tel système de pilotage manuel.

Les figures du dessin annexé feront bien comprendre comment l'invention peut être réalisée. Sur ces figures, des références identiques désignent des éléments semblables.

La figure 1 est le schéma synoptique d'un dispositif d'aide au pilotage qui illustre un mode de réalisation de l'invention.

La figure 2 montre schématiquement un système de pilotage manuel comprenant un dispositif d'aide au pilotage.

La figure 3 illustre schématiquement un exemple d'affichage, susceptible d'être réalisé par un dispositif d'aide au pilotage.

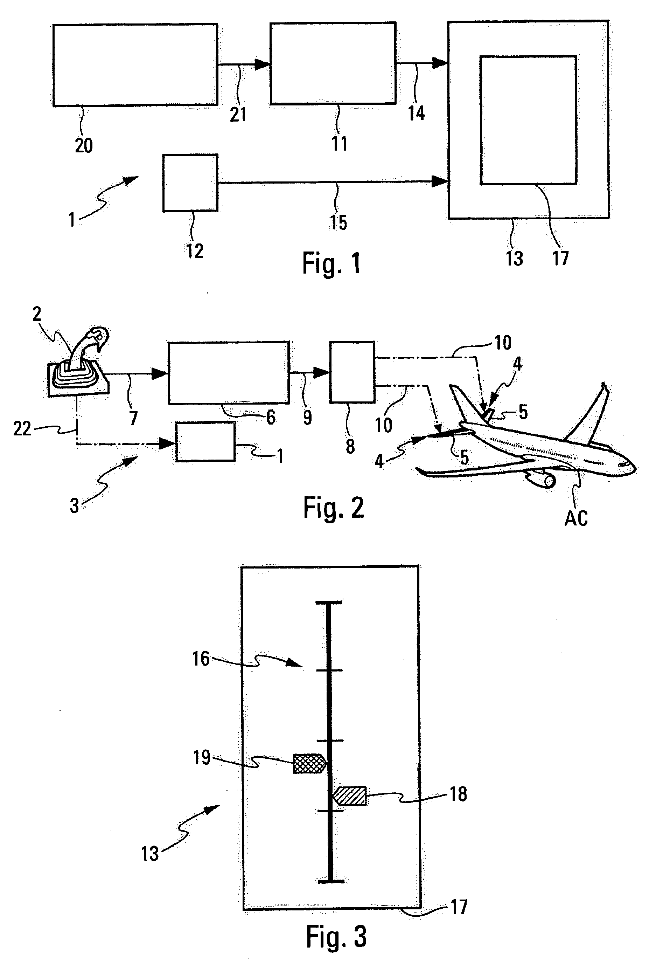

Le dispositif 1 représenté schématiquement sur la figure 1 et permettant d'illustrer l'invention, est destiné à aider au pilotage d'un aéronef AC, notamment d'un avion de transport civil, lors d'un vol parabolique en vue de générer une impesanteur dans l'aéronef AC.

Par vol parabolique, on entend un vol au cours duquel on amène l'aéronef AC sur une trajectoire usuelle de forme parabolique, permettant d'obtenir une situation d'impesanteur à l'intérieur dudit aéronef AC, pendant une certaine durée, généralement de l'ordre d'une vingtaine de secondes. La méthode de calcul de la trajectoire parabolique permettant de créer les conditions d'impesanteur est connue et n'est pas présentée davantage dans la présente description.

La présente invention s'applique à un vol réalisé manuellement par un pilote en agissant sur un manche 2 usuel de l'aéronef AC, faisant partie d'un système de pilotage manuel 3.

Comme représenté de façon schématique et très générale sur la figure 2, ce système de pilotage manuel 3 comprend :

- le manche 2 usuel qui est apte à être actionné (en étant déplacé (pivoté) vers l'avant ou vers l'arrière) par un pilote pour modifier sa position (c'est-à-dire dans sa déflexion) et qui est configuré pour agir sur les gouvernes de profondeur 4 de l'aéronef AC, agencées sur les empennages horizontaux 5 de l'aéronef AC, dans le but de générer un pilotage de l'aéronef AC sur l'axe de tangage ;

- un calculateur 6 qui calcule, de façon usuelle, en fonction de la position du manche 2 (exprimée par un angle de déflexion) reçue par l'intermédiaire d'une liaison 7, un ordre de commande qui est transmis via une liaison 9 à un ensemble 8 d'actionneurs associés aux gouvernes de profondeur 4 de l'aéronef AC ; et
- lesdites gouvernes de profondeur 4 qui sont braquées par l'action des actionneurs associés, comme indiqué schématiquement par des flèches 10 en traits mixtes sur la figure 2.

Bien que le système de pilotage 3 soit représenté à l'extérieur de l'aéronef AC sur cette figure 2 pour des raisons de simplification du dessin, il est bien entendu embarqué sur ce dernier.

Dans le cadre de la présente invention, le système de pilotage considéré peut correspondre à un système à commandes de vol électriques, comme représenté sur la figure 2, ou à un système à commandes de vol mécaniques.

Selon l'invention, ledit dispositif d'aide au pilotage 1 qui est également embarqué sur l'aéronef AC et qui fait par exemple partie du système de pilotage manuel 3 (figure 2) comporte, comme représenté sur la figure 1 :

- une unité de calcul 11 qui est configurée pour calculer une consigne de manche C correspondant à une position optimale courante du manche 2 pour réaliser le vol parabolique ;
- une unité de détermination de position 12 usuelle qui est configurée pour déterminer la position effective (réelle) courante du manche 2 (comme illustré par une liaison 22 sur la figure 2), la consigne de manche et la position courante étant exprimée dans une même unité, par exemple en degrés représentatifs de l'angle de déflexion du manche par rapport à une position neutre ; et
- une unité d'affichage 13 qui est reliée, par l'intermédiaire d'une liaison 14 à l'unité de calcul 11 et par l'intermédiaire d'une liaison 15 à l'unité de détermination de position 12.

L'unité d'affichage 13 comprend au moins un écran 17 installé dans le poste de pilotage de l'aéronef AC et elle est configurée pour présenter sur au moins une échelle 16 de positions de manche, qui est affichée sur l'écran 17, simultanément, comme représenté sur la figure 3 :

- un premier indicateur 18 représentatif de ladite consigne de manche, calculée par ladite unité de calcul 11 ; et
- un second indicateur 19 représentatif de ladite position effective courante du manche, déterminée par ladite unité de détermination de position 12.

Dans un mode de réalisation préféré, représenté sur la figure 3, l'échelle 16 est affichée de façon verticale, et les indicateurs 18 et 19 sont affichés de part et d'autre de cette échelle verticale 16. Un tel affichage est très intuitif et permet d'indiquer directement au pilote s'il doit pousser ou tirer sur le manche 2. Toutefois, un autre type d'affichage des indicateurs est également possible, par exemple avec les deux indicateurs affichés sur un même côté de l'échelle.

Les indicateurs 18 et 19 sont représentés, par exemple, sous forme de flèche ou de barrette ou de tout autre élément graphique, et présentent des formes et/ou des couleurs identiques ou différentes. De plus, l'échelle 16 peut être graduée ou non.

Ainsi, grâce à l'invention, la consigne de manche (qui illustre une position optimale du manche 2 pour faire voler l'aéronef AC selon un vol parabolique permettant de créer une impesanteur) est calculée en temps réel et est adaptée à la situation courante de l'aéronef AC, au cours du vol. Cette consigne de manche est fournie au pilote via l'indicateur 18, qui indique ainsi à tout moment, la position où doit être amené le manche 2 pour réaliser un pilotage optimal de l'aéronef AC.

De plus, comme ladite consigne de manche dépend uniquement de la vitesse et de l'assiette longitudinale, comme précisé ci-dessous, elle est quasi insensible aux perturbations atmosphériques et n'est pas dépendante de la qualité de la mesure du facteur de charge. Par conséquent, le dispositif 1 fournit une aide au pilote en lui indiquant en terme réel, de façon directe, quelle action il doit appliquer sur son manche 2 pour réaliser le vol parabolique, permettant ainsi de minimiser les actions parasites qui dégradent la qualité de l'impesanteur.

Le dispositif 1 comporte également un ensemble 20 de sources d'informations qui fournissent des informations à l'unité de calcul 11, via une liaison 21, et notamment les valeurs courantes de paramètres de l'aéronef AC, en particulier sa vitesse et son assiette longitudinale, comme précisé ci-dessous.

Dans un mode de réalisation préféré, l'unité de calcul 11 comprend des éléments de calcul (intégrés et non représentés) pour calculer ladite consigne de manche C, à l'aide de l'équation suivante :

$$C = k0 + k1 * \cos\vartheta / V + k2 * \sin 2\vartheta / V^2$$

dans laquelle :

- $\vartheta$ est l'assiette longitudinale courante de l'aéronef AC ;
- V est la vitesse courante de l'aéronef AC ; et
- $k0$, $k1$ et $k2$ sont des constantes prédéterminées.

Ces constantes $k0$, $k1$ et $k2$ dépendent de caractéristiques massiques et aérodynamiques de l'aéronef AC, ainsi que d'une cinématique entre la position du manche 2 et le braquage correspondant des gouvernes de profondeur 4.

Dans ce mode de réalisation préféré :

- l'assiette longitudinale $\vartheta$ de l'aéronef AC est mesurée, de façon usuelle, à l'aide d'au moins un capteur inertiel de l'aéronef AC, qui fait partie de l'ensemble 21 ; et
- la vitesse V de l'aéronef AC est déterminée à l'aide d'au moins l'un des moyens embarqués suivants qui font également partie de l'ensemble 21 :

  - au moins un capteur inertiel ;
  - au moins un récepteur d'un système de positionnement par satellites de type GPS ; et
  - au moins un capteur de pression ou de température.

Ainsi, la vitesse peut être obtenue par des capteurs inertiels. Une vitesse de type GPS peut également être utilisée. A défaut de disposer de la vitesse dans le repère terrestre, il est également possible d'utiliser une vitesse aérodynamique obtenue, de façon usuelle, à partir de mesures de pression statique et dynamique, ainsi que de la température totale.

Dans le cadre de la présente invention, les constantes $k0$, $k1$ et $k2$ sont déterminées de manière expérimentale, soit à partir de résultats de simulations, à l'aide d'un modèle du comportement dynamique de l'aéronef, soit à partir de résultats d'essais en vol. Il est par exemple possible de demander à un pilote entraîné de faire voler l'aéronef AC selon une trajectoire parabolique (telle que celle devant être mise en oeuvre pour obtenir les conditions d'impesanteur recherchées), en utilisant par exemple une méthode usuelle de pilotage de l'accélération, telle que pratiquée usuellement à l'aide d'une mesure de l'accélération verticale indiquée au pilote. Les enregistrements réalisés lors de cet essai en vol fournissent une certaine évolution de la déflexion du manche. A partir de cette courbe, il suffit d'ajuster les coefficients $k0$, $k1$ et $k2$ pour que la consigne suive la position moyenne du manche 2 de façon optimale. La valeur de la consigne est calculée à partir des valeurs enregistrées de l'assiette longitudinale et de la vitesse de l'aéronef, au cours de cet essai.

Aussi, en résumé, on peut déterminer les constantes $k0$, $k1$ et $k2$, en mettant en oeuvre les opérations suivantes :

- déterminer et enregistrer, en temps réel, des valeurs de l'assiette longitudinale de l'aéronef, de la vitesse de l'aéronef et de la déflexion du manche, au cours d'au moins un vol parabolique réalisé par l'intermédiaire d'au moins une simulation et/ou d'au moins un essai en vol ; et
- calculer lesdites constantes $k0$, $k1$ et $k2$ à l'aide des valeurs de l'assiette longitudinale, de la vitesse et de la déflexion du manche, ainsi enregistrées.

Par conséquent, l'aide fournie au pilote par le dispositif 1 consiste en une indication sur l'échelle verticale 16 (via l'indicateur 18) de la position optimale du manche 2 à appliquer à tout moment lors du vol le long de la trajectoire parabolique. Sur la même échelle 16 est représentée la position effective courante du manche 2 (via l'indicateur 19). La technique de pilotage mise en oeuvre par le pilote est alors très simple. Elle consiste à actionner le manche 2 de sorte que l'indicateur 19 de position courante du manche 2 arrive en regard (à la même hauteur pour une échelle verticale 16) de la position de l'indicateur 18 fournissant la consigne.

## Revendications

1. Procédé d'aide au pilotage d'un aéronef (AC) lors d'un vol parabolique en vue de générer une impesanteur dans l'aéronef (AC), ledit aéronef (AC) comprenant un manche (2) apte à être actionné par un pilote pour modifier sa position et configuré pour agir sur au moins une gouverne de profondeur (4) afin de générer un pilotage de l'aéronef AC sur l'axe de tangage en fonction de la position dudit manche (2), ledit procédé comprenant une suite d'étapes, mises en oeuvre de façon automatique et répétitive, lors d'un vol parabolique de l'aéronef (AC) et consistant en temps réel :

    a) à calculer une consigne de manche correspondant à une position optimale courante du manche (2) pour réaliser le vol parabolique ;
    b) à déterminer une position effective courante du manche (2) ; et
    c) à présenter simultanément, sur au moins une échelle (16) de positions de manche, affichée sur un écran (17) du poste de pilotage :

        - un premier indicateur (18) représentatif de ladite consigne de manche, calculée à l'étape a) ; et
        - un second indicateur (19) représentatif de ladite position effective courante du manche (2), déterminée à l'étape b),

    **caractérisé en ce qu'**à l'étape a), ladite consigne de manche C est calculée à l'aide de l'équation suivante :

$$C = k0 + k1 * \cos\vartheta / V + k2 * \sin 2\vartheta / V^2$$

dans laquelle :

    - $\vartheta$ est une assiette longitudinale courante de l'aéronef (AC) ;
    - V est une vitesse courante de l'aéronef (AC) ; et

    - $k0$, $k1$ et $k2$ sont des constantes prédéterminées.

2. Procédé selon la revendication 1, **caractérisé en ce que** l'assiette longitudinale de l'aéronef (AC) est mesurée à l'aide d'au moins un capteur inertiel embarqué sur l'aéronef (AC).

3. Procédé selon l'une des revendications 1 et 2, **caractérisé en ce que** la vitesse de l'aéronef (AC) est déterminée à l'aide d'au moins l'un des moyens embarqués suivants :

    - au moins un capteur inertiel ;
    - au moins un récepteur d'un système de positionnement par satellites ; et
    - au moins un capteur de pression ou de température.

4. Procédé selon l'une quelconque des revendications précédentes, **caractérisé en ce qu'**à l'étape c), l'échelle (16) est affichée de façon verticale et lesdits premier et second indicateurs (18, 19) sont affichés de part et d'autre de cette échelle verticale (16).

5. Procédé selon l'une quelconque des revendications précédentes, **caractérisé en ce qu'**il comporte une étape supplémentaire, antérieure à l'étape a) et consistant à déterminer les constantes $k0$, $k1$ et $k2$ en mettant en oeuvre les opérations suivantes :

    - déterminer et enregistrer, en temps réel, des valeurs de l'assiette longitudinale de l'aéronef, de la vitesse de l'aéronef et de la déflexion du manche, au cours d'au moins un vol parabolique réalisé par l'intermédiaire d'au moins l'une des opérations suivantes : au moins une simulation et/ou au moins un essai en vol ; et
    - calculer lesdites constantes $k0$, $k1$ et $k2$ à l'aide des valeurs de l'assiette longitudinale, de la vitesse et de la déflexion du manche, ainsi enregistrées.

6. Dispositif d'aide au pilotage d'un aéronef lors d'un vol parabolique d'un aéronef (AC) en vue de générer une impesanteur dans l'aéronef (AC), ledit aéronef (AC) comprenant un manche (2) apte à être actionné par un pilote pour modifier sa position et configuré pour agir sur au moins une gouverne de profondeur (4) afin de générer un pilotage de l'aéronef sur l'axe de tangage en fonction de la position dudit manche (2), ledit dispositif (1) comportant :

    - une unité de calcul (11) configurée pour calculer automatiquement une consigne de manche correspondant à une position optimale courante du manche (2) pour réaliser le vol parabolique ;
    - une unité de détermination de position (12) configurée pour déterminer automatiquement une position effective courante du manche (2) ; et

- une unité d'affichage (13) configurée pour présenter automatiquement sur au moins une échelle (16) de positions de manche, qui est affichée sur un écran (17) du poste de pilotage, simultanément :

    • un premier indicateur (18) représentatif de ladite consigne de manche, calculée par ladite unité de calcul (11) ; et
    • un second indicateur (19) représentatif de ladite position effective courante du manche (12), déterminée par ladite unité de détermination de position (12),

**caractérisé en ce que** ladite unité de calcul (11) est configurée pour calculer automatiquement ladite consigne de manche *C* à l'aide de l'équation suivante :

$$C = k0 + k1 * \cos \vartheta / V + k2 * \sin 2\vartheta / V^2$$

dans laquelle :

- $\vartheta$ est une assiette longitudinale courante de l'aéronef (AC) ;
- V est une vitesse courante de l'aéronef (AC) ; et
- *k*0, *k*1 *et k*2 sont des constantes prédéterminées.

7. Dispositif selon la revendication 6,
**caractérisé en ce que** qu'il comporte, de plus, un ensemble (20) de sources d'informations, comprenant au moins l'une des sources d'informations suivantes :

- au moins un capteur inertiel ;
- au moins un récepteur d'un système de positionnement par satellites ; et
- au moins un capteur de pression ou de température.

8. Système de pilotage manuel d'un aéronef, ledit système de pilotage manuel (3) comprenant un manche (2) apte à être actionné par un pilote pour modifier sa position et configuré pour agir sur au moins une gouverne de profondeur (4) afin de générer un pilotage de l'aéronef AC sur l'axe de tangage en fonction de la position dudit manche (2),
**caractérisé en ce qu'**il comporte, de plus, un dispositif d'aide au pilotage (1) tel que celui spécifié sous l'une des revendications 6 et 7.

9. Aéronef,

**caractérisé en ce qu'**il comporte un dispositif d'aide au pilotage (1) tel que celui spécifié sous l'une des revendications 6 et 7.

10. Aéronef,
**caractérisé en ce qu'**il comporte un système de pilotage manuel (3) tel que celui spécifié sous la revendication 8.

**Patentansprüche**

1. Verfahren zur Unterstützung bei der Steuerung eines Luftfahrzeugs (AC) während eines Parabelflugs, um im Luftfahrzeug (AC) Schwerelosigkeit zu erzeugen, dieses Luftfahrzeug (AC) verfügt über einen Griff (2), der vom Piloten betätigt werden kann, um seine Position zu ändern und so konfiguriert ist, mindestens ein Höhenruder (4) zu betätigen, um die Steuerung des Luftfahrzeugs (AC) um eine Querachse zu generieren, in Abhängigkeit von der Position dieses Griffs (2), dieses Verfahren umfasst eine Abfolge von Schritten, die automatisch und wiederholt bei einem Parabelflug des Luftfahrzeugs (AC) eingeleitet wird und darin besteht, in Realzeit:

    a) die Griffeinstellung zu berechnen, die der optimalen Ist- Position des Griffs (2) entspricht, um den Parabelflug durchzuführen;
    b) die aktuelle Ist-Position des Griffs (2) zu bestimmen; und
    c) gleichzeitig auf mindestens einer Skala (16) der Griffpositionen, angezeigt auf einem Bildschirm (17) des Cockpits darzustellen

        - einen ersten Anzeiger (18), zur Darstellung dieser Griffeinstellung, berechnet in Schritt a); und
        - einen zweiten Anzeiger (19), zur Darstellung der aktuellen Ist-Position des Griffs (2), die in Schritt b) bestimmt wurde,

**dadurch gekennzeichnet, dass** in Schritt a) diese Griffeinstellung C mit der folgenden Gleichung berechnet wird:

$$C = k0 + k1 * \cos \vartheta / V + k2 * \sin 2\vartheta / v^2,$$

- $\vartheta$ die aktuelle Neigung des Luftfahrzeugs (AC) ist;
- V die aktuelle Geschwindigkeit des Luftfahrzeugs (AC) ist; und
- *k0, k1* und *k2* vorher bestimmte Konstanten sind.

2. Verfahren gemäß Anspruch 1,

**dadurch gekennzeichnet, dass** die Neigung des Luftfahrzeugs (AC) mittels mindestens einem, an Bord des Luftfahrzeugs (AC) befindlichen Trägheitssensors gemessen wird.

3. Verfahren nach irgendeinem der Ansprüche 1 und 2, **dadurch gekennzeichnet, dass** die Geschwindigkeit des Luftfahrzeugs (AC) mittels mindestens eines der folgenden an Bord befindlichen Geräte bestimmt wird:

- mindestens ein Trägheitssensor,
- mindestens ein Empfänger eines globales Navigationssatellitensystems; und
- mindestens ein Druck- oder Temperaturfühler.

4. Verfahren nach irgendeinem der vorangehenden Ansprüche, **dadurch gekennzeichnet, dass** in Schritt c) die Skala (16) vertikal angezeigt wird und der genannte erste, bzw. zweite Anzeiger (18, 19) beiderseits dieser vertikalen Skala (16) angezeigt sind.

5. Verfahren nach irgendeinem der vorangehenden Ansprüche, **dadurch gekennzeichnet, dass** es einen weiteren Schritt, vor dem Schritt a) enthält, der darin besteht, die Konstanten *k0, k1* und *k2* zu berechnen, indem die folgenden Operationen durchgeführt werden:

- Bestimmung und Aufzeichnung in Realzeit der Werte der Neigung des Luftfahrzeugs, der Geschwindigkeit des Luftfahrzeugs und der Auslenkung des Griffs, während mindestens eines Parabelfluges, der durch mindestens eine der folgenden Operationen durchgeführt wurde: mindestens eine Simulation und/ oder mindestens ein Versuch während eines Fluges; und
- Berechnung dieser Konstanten *k0, k1* und *k*2 mittels der Neigungswerte, der Geschwindigkeit und der Auslenkung des Griffs, die so aufgezeichnet wurden.

6. Vorrichtung zur Unterstützung bei der Steuerung eines Luftfahrzeugs (AC) während eines Parabelflugs, um im Luftfahrzeug (AC) Schwerelosigkeit zu erzeugen, dieses Luftfahrzeug (AC) verfügt über einen Griff (2), der vom Piloten betätigt werden kann, um seine Position zu ändern und so konfiguriert ist, mindestens ein Höhenruder (4) zu betätigen, um eine Steuerung des Luftfahrzeugs um eine Querachse zu generieren, in Abhängigkeit der Position dieses Griffs (2), diese Vorrichtung (1) umfasst:

- eine Rechenreinheit, (11), konfiguriert um automatisch die Griffeinstellung zu berechnen, die der optimalen Ist- Position des Griffs (2) entspricht, um den Parabelflug durchzuführen;

- eine Einheit zur Positionsbestimmung (12), konfiguriert um automatisch die aktuelle Ist- Position des Griffs (2) zu bestimmen; und
- eine Anzeigeeinheit (13), konfiguriert um auf mindestens einer Skala (16) der Griffpositionen, die auf einem Bildschirm (17) des Cockpits angezeigt wird, gleichzeitig automatisch darzustellen:

• ein erster Anzeiger (18), zur Darstellung dieser Griffeinstellung, berechnet von dieser Recheneinheit (11); und
• ein zweiter Anzeiger (19), zur Darstellung der aktuellen Ist-Position des Griffs (12), bestimmt durch diese Einheit zur Positionsbestimmung (12);

**dadurch gekennzeichnet, dass** diese Recheneinheit (11) konfiguriert ist zur automatischen Berechnung dieser Griffeinstellung C, mittels der folgenden Gleichung:

$$C = k0 + k1 * \cos \vartheta/v + k2 * \sin 2\, \vartheta/V^2$$

in der:

- $\vartheta$ die aktuelle Neigung des Luftfahrzeugs (AC) ist;
- V die aktuelle Geschwindigkeit des Luftfahrzeugs (AC) ist; und
- *k0, k1* und *k*2 vorher bestimmte Konstanten sind.

7. Vorrichtung nach Anspruch 6, **dadurch gekennzeichnet, dass** es außerdem verschiedene Informationsquellen (20) umfasst, die mindestens eine der folgenden Informationsquellen beinhalten:

- mindestens ein Trägheitssensor;
- mindestens ein Empfänger eines globalen Navigationssatellitensystems; und
- mindestens ein Druck- oder Temperaturfühler.

8. System zur manuellen Steuerung eines Luftfahrzeugs, dieses manuelle Steuerungssystem (3) umfasst einen Griff (2), der vom Piloten betätigt werden kann, um seine Position zu ändern und ist so konfiguriert mindestens ein Höhenruder (4) zu betätigen, um eine Führung des Luftfahrzeugs (AC) um eine Querachse zu generieren, in Abhängigkeit von der Position dieses Griffs (2). **dadurch gekennzeichnet, dass** es außerdem eine Vorrichtung zur Unterstützung bei der Steuerung (1) umfasst, wie sie in einem der Ansprüche 6 und 7 beschrieben ist.

**9.** Luftfahrzeug,
**dadurch gekennzeichnet, dass** es außerdem eine Vorrichtung zur Unterstützung bei der Steuerung (1) enthält, wie sie in einem der Ansprüche 6 und 7 beschrieben ist.

**10.** Luftfahrzeug,
**dadurch gekennzeichnet, dass** es ein manuelles Steuerungssystem (3) enthält, wie es in Anspruch 8 beschrieben ist.

**Claims**

**1.** Method for assisting the piloting of an aircraft (AC) during a parabolic flight in order to generate weightlessness in the aircraft (AC), said aircraft (AC) comprising a control stick (2) capable of actuation by a pilot to alter its position and configured to act on at least one elevator (4) so as to generate piloting of the aircraft AC on the pitch axis according to the position of said control stick (2), said method comprising a sequence of steps, carried out in an automatic and repeated manner, during a parabolic flight of the aircraft (AC) and consisting in real time in:

    a) computing a control stick command corresponding to an optimum current position of the control stick (2) for parabolic flight;
    b) determining an effective current position of the control stick (2); and
    c) simultaneously showing, on at least one scale (16) of control stick positions which is displayed on a screen (17) of the cockpit:

        - a first indicator (18) representing said control stick command computed in step a); and
        - a second indicator (19) representing said effective current position of the control stick (2), determined in step b),

**characterized in that** in step a) said control stick command C is computed on the basis of the following equation:

$$C = k0 + k1 * \cos\vartheta/V + k2 * \sin 2\vartheta/V^2$$

in which:

    - $\vartheta$ is a current angle of pitch of the aircraft (AC);
    - V is a current speed of the aircraft (AC); and
    - $k0$, $k1$ and $k2$ are predetermined constants.

**2.** Method according to claim 1,
**characterized in that** the angle of pitch of the aircraft (AC) is measured by means of at least one inertial sensor on board the aircraft (AC).

**3.** Method according to one of claims 1 and 2, **characterized in that** the speed of the aircraft (AC) is determined by means of at least one of the following onboard means:

    - at least one inertial sensor;
    - at least one receiver of a satellite positioning system; and
    - at least one pressure or temperature sensor.

**4.** Method according to any one of the preceding claims, **characterized in that** in step c) the scale (16) is displayed vertically and said first and second indicators (18, 19) are displayed on either side of this vertical scale (16).

**5.** Method according to any one of the preceding claims, **characterized in that** it comprises an additional step, which precedes step a) and consists in determining the constants $k0$, $k1$ and $k2$ by carrying out the following operations:

    - determining and recording, in real time, values for the angle of pitch of the aircraft, for the speed of the aircraft and for deflection of the control stick, over the course of at least one parabolic flight performed by means of at least one of the following operations: at least one simulation and/or at least one flight test; and
    - computing said constants $k0$, $k1$ and $k2$ on the basis of the values for the angle of pitch, for the speed and for deflection of the control stick, thus recorded.

**6.** Device for assisting the piloting of an aircraft during a parabolic flight of an aircraft (AC) in order to generate weightlessness in the aircraft (AC), comprising a control stick (2) capable of actuation by a pilot to alter its position and configured to act on at least one elevator (4) so as to generate piloting of the aircraft on the pitch axis according to the position of said control stick (2), said device (1) comprising:

    - a computation unit (11) configured for automatically computing a control stick command corresponding to an optimum current position (2) for parabolic flight;
    - a position determination unit (12) configured to automatically determine an effective current position of the control stick (2); and
    - a display unit (13) configured to automatically show on at least one scale (16) of control stick positions which is displayed on a screen (17) of the cockpit, simultaneously:

        • a first indicator (18) representing said control stick command computed for said computation unit (11); and
• a second indicator (19) representing said effective current position of the control stick (12), determined by said position determination unit (12),

**characterized in that** said computation unit (11) is configured to automatically compute said control stick command C on the basis of the following equation:

$$C = k0 + k1 * \cos \vartheta / V + k2 * \sin 2\vartheta / V^2$$

in which:

- $\vartheta$ is a current angle of pitch of the aircraft (AC);
- V is a current speed of the aircraft (AC); and
- $k0$, $k1$ and $k2$ are predetermined constants.

7. Device according to claim 6,
**characterized in that** it additionally comprises a set (20) of information sources, comprising at least one of the following information sources:

- at least one inertial sensor;
- at least one receiver of a satellite positioning system; and
- at least one pressure or temperature sensor.

8. System for manually piloting an aircraft, said manual pilot system (3) comprising a control stick (2) capable of actuation by a pilot to alter its position and configured to act on at least one elevator (4) so as to generate piloting of the aircraft AC on the pitch axis according to the position of said control stick (2),
**characterized in that** it additionally comprises a piloting assistance device (1) as specified in one of claims 6 and 7.

9. Aircraft,
**characterized in that** it comprises a piloting assistance device (1) as specified in one of claims 6 and 7.

10. Aircraft,
**characterized in that** it comprises a manual pilot system (3) as specified in claim 8.

Fig. 1

Fig. 2

Fig. 3

**EP 2 853 860 B1**

## RÉFÉRENCES CITÉES DANS LA DESCRIPTION

**Documents brevets cités dans la description**

- US 5971319 A